# EUROPEAN PATENT APPLICATION

(11) **EP 0 669 491 A1**
(43) Date of publication of application: **30.08.1995**
(21) Application number: 94109855.0
(22) Date of filing: 24.06.1994
(51) Int. Cl.: F16M 11/38

(54) **Height-adjustable monitor stand**

(30) Priority: 28.02.1994 US 202959
(71) Applicant: Tandberg Data Display AS, 01471 Skarer (NO)
(72) Inventor: Helgeland, Olav, N-1482 Nittedal (NO)
(74) Representative: Goddar, Heinz J., Dr.

(57) **Abstract**

An adjustable stand for a piece of equipment such as a CRT (10) or other monitor having a plurality of intermeshed crisscross legs, a first row of legs (20) connected to a first stand supporting bar, and a back row of legs (22) connected to a second stand supporting bar, the top rows of the legs being connected to a front axle (32) and rear axle (30) respectively. The front axle (32) is axially rotatable by one or two hand knobs (36,38) and provides along its length two gear regions. Arranged spanning at two positions between the front axle and the rear axle are struts (40,42) which elongate or contract due to the rotation of the gear regions on the front axle (32) to raise or lower the stand. Springs (70) are provided spanning between the front axle and the rear axle to counterbalance the weight effect of a CRT (10) placed on the stand.

## Description

### BACKGROUND OF THE INVENTION

The present invention relates to an adjustable stand for a piece of equipment such as a CRT monitor. The stand can also be adapted for other types of equipment where controlled and easy positioning is required.

In order for a CRT monitor to conform to rigorous ergonomic standards, the monitor must, among other requirements, have a height-adjustable stand constructed in such a manner that pinching fingers of an operator or damaging the associated cables during adjustment is prevented. The height adjustment interval must be at least 11 cm and the uppermost line of text on the screen must be less than 50cm from the table when the stand is in its lowest position.

These stands have been difficult to design, and the stands currently on the market fail to meet all the requirements and are relatively expensive to produce.

### SUMMARY OF THE INVENTION

Objects of the present invention are to provide an equipment stand, more particularly, a stand for a CRT or computer monitor which is easily and precisely adjustable, sturdy and stable and which prevents accidental pinching of fingers or cables during adjustment. It is an object of the present invention to provide a stand with a wide range of adjustment positions both vertically and angularly and which maintains those positions during operation including adding or subtracting weight load on the stand. It is an object of the present invention to construct a stand of plastic which provides sufficient structural strength.

The stand of the present invention provides intermeshed and crisscrossed support legs, pinned at a pivot axis and having lower ends supported from the table. Upper ends of the intermeshed legs are connected by struts having a thread coupled central region, the strut to be extendable or retractable in length upon axial rotation of a portion of the strut. An adjustment axle with user adjustment knobs has bevel gear operators engaged to bevel gears of the struts such that rotation of the axle causes axial rotation of the portion of the struts. Advantageously, two struts are employed having opposite threading because the associated bevel gear operators of the axle both face inwardly. A pair of springs are applied to urge the upper ends of the legs toward each other to balance the effect of the weight of the equipment supported to assist in raising the stand.

The present invention provides a stand which conforms to the most rigorous ergonomic standards. The stand height is self-locking. The stand will not change position if the monitor should be lifted and moved about or if an extra weight happens to be added. The design of the stand legs insures that there is no drastic scissors effect and reduced possibility of pinching fingers of an operator or damaging the cables. The design of the legs allows for a lower position, very close to the table. The adjustment of the stand ranges from 43mm to 153mm fulfilling the height requirements for both 15 and 17 inch monitors. The stand allows the monitor to be tilted 5 _{°} forward and 20 _{°} backwards even in the lowest position. The stand is stable. The stand and monitor will not overturn subject to a tilt of up to 10 from the horizontal. The stand uses a multi-arm construction in order to lessen the strain on each arm and enable the use of injection molding in the production process.

### BRIEF DESCRIPTION OF THE DRAWINGS

Figure 1 is a side elevational view of a monitor supported by a stand of the present invention;
Figure 2 is a front elevational view of the arrangement of Figure 1;
Figure 3 is an enlarged top view of the stand shown in Figure 1 with some leg supports not shown for clarity;
Figure 4 is an enlarged sectional view taken generally along line IV-IV of Figure 1 with some leg supports not shown for clarity;
Figure 5 is a sectional view taken generally along V-V of Figure 3; and
Figure 6 is a sectional view taken generally along VI-VI of Figure 4.

### DETAILED DESCRIPTION OF THE PREFERRED EMBODIMENTS

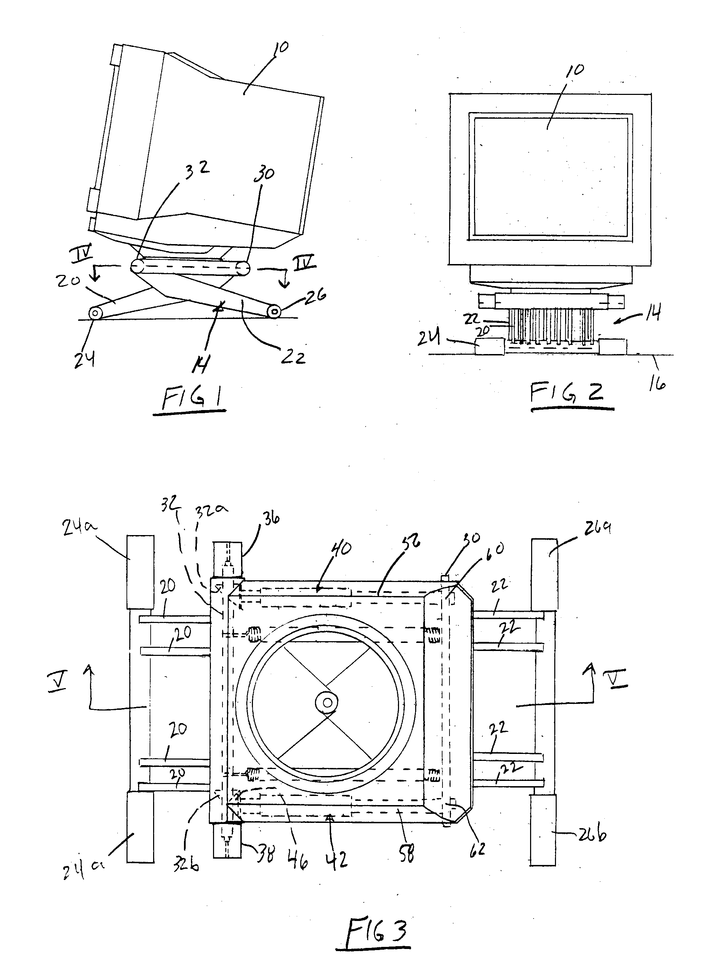

Figures 1 and 2 illustrate a monitor 10 supported by a stand 14 on a surface 16 such as a table top. The stand 14 provides a plurality of frontward extending legs 20 and rearward extending legs 22 connected at their outward ends to support bars 24, 26 respectively. Nine pairs of legs 20, 22 can be provided. The frontwardly extending legs 20 and the rearwardly extending legs 24 mesh together in comb fashion to provide a lightweight and evenly distributed support which can be injection molded plastic. Opposite ends of the legs 20, 22 are connected to rear axle 30 and front axle 32 respectively.

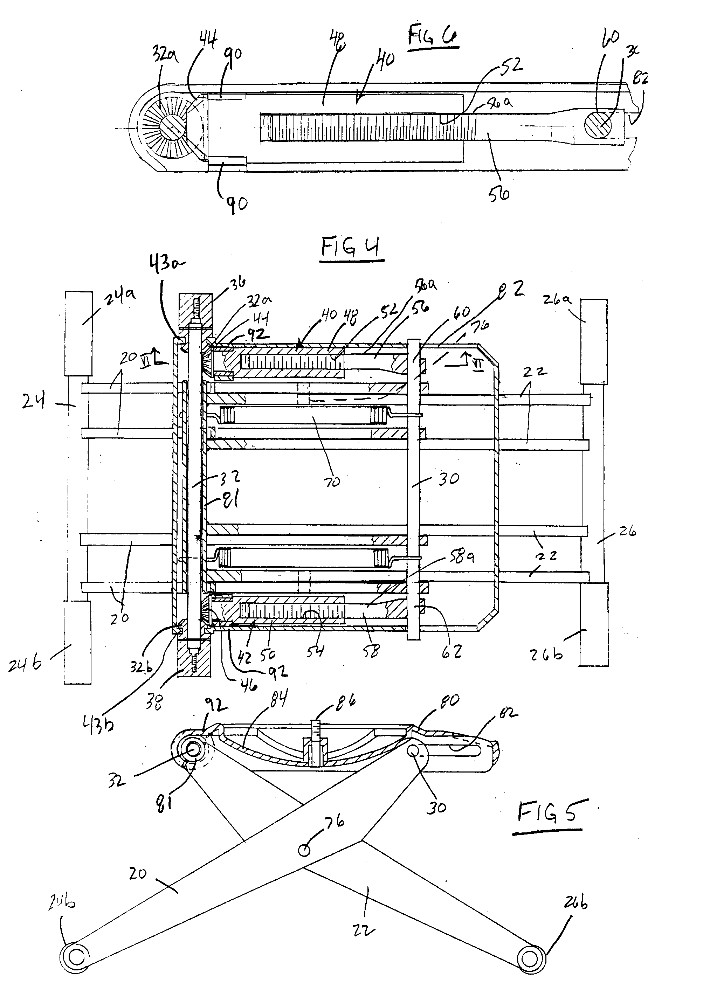

Figures 3 and 4 illustrate the arrangement of Figures 1 and 2 in more detail with many of the legs 20, 22 not shown for clarity. The front axle 32 is connected at opposite ends to adjusting knobs 36, 38 respectively by screws. The axle 32 is a hollow shaft. By rotating the adjusting knobs 36, 38 the axle 32 is rotated. Arranged spanning between the front axle 32 and the rear axle 30 are left handed strut 40 and right handed strut 42. The axle 32 provides locked thereto, bevel gear operators 32a, 32b facing inwardly on opposite ends of the axle 32 just inboard of the knobs 36, 38. The operators 32a, 32b are aligned with the struts 40, 42 respectively. The operators 32a, 32b have annular grooves which capture inwardly directed flanges 43a, 43b to be retained in place with respect to the axle. The struts 40, 42 provide right angle gears or bevel gears 44, 46 respectively enmesh with the operators 32a, 32b. The operators and gears are arranged such that axial rotation of the axle 32 causes an opposite axial rotation of the bevel gears 44, 46.

The struts 40, 42 provide socketed sections 48, 50 having internal threads 52, 54. The socketed sections 48, 50 are fixed to rotate with the gears 44, 46. Threaded into the socket 48, 50 are studs 56, 58 respectively. The studs 56, 58 are connected to the rear axle 30 with a pivoting connection 60, 62 respectively, but are prevented from rotating axially. It should be noted that the threads 52 within the socket 48 and outside threads 56a on the stud 56 are left handed threads and the threads 54 on the socket 50 and the outside threads 58a on the stud 58 are right handed threads. Thus, axial rotation of either of the knobs 36, 38 will cause opposite rotations in the gears 44, 46 and opposite rotations of the sockets 40, 42, and studs 56, 58, but because of the different thread configurations, a same axial displacement direction of the studs 56, 58 will occur either drawing the studs to the left of Figure 3 or displacing the studs to the right of Figure 3.

Two springs 70, 72 are provided connecting the front axle 32 to the rear axle 30 and biasing the axles toward each other. These springs assist in raising the stand to overcome the weight of the monitor or other piece of equipment. Because of the stud and socket arrangement, the stud is effectively self-locking in position as the weight of the equipment or the force of the springs will not back drive these threaded components.

As shown in Figure 4, the support bars 24, 26 provide outwardly extending feet 24a, 24b, 26a, 26b which can have rubber or-plastic cylinders applied to them for non-slip and non-scratch interface with the surface 16. At least some of the legs 20, 22 are connected with a pin 76 at their pivot point.

As shown in Figure 5, supported from the front axle 32 and the rear axle 30 is a monitor support platform 80. This platform 80 is operatively connected for translatory movement with the front axle 32 by a journal tube 81 and the flanges 43a, 43b, and the platform 80 provides a slot 82 for travel of the rear axle 30 therethrough during raising and lowering of the support stand 80.

The support stand provides a bowled surface 84 having a connecting stud 86 for engagement into a hole in a bottom of the monitor 10. The monitor can be pivoted within the bowl 84 to a range of angles. Due to the self-locking height positioning of the stand, the stand will not change position if the monitor should be lifted and moved about or if an extra weight should be added. The stand is adjustable by turning either one or both knobs 36, 38.

Figure 6 illustrates the strut 40 locked into axial position with respect to the axle 32 by a journal 90 which connects to wall structure 92 of the monitor support 80. Rotation of the operator 32a rotates the bevel gear 44 which rotates the socket 48 which either extends or retracts the stud 52 therefrom or therein. The stud 52 cannot axially rotate due to the connection 60 at the axle 30. The axle 30 is moved through the slot 82 with the stud 56, to raise or lower the stand.

Because of the plurality of legs and their intermeshing configuration, there is no drastic scissors effect and a reduced possibility of pinching fingers or cables within the stand. The intermeshing of the legs allows for a lower position very close to the surface 16. The stand can be adjusted between 43mm to 153mm which fulfills the height requirements for both 15 inch and 17 inch monitors. Even in the lowest position, the stand provides that the monitor may be tilted 5 forward and 20 backward. The stand is advantageously stable, allowing a surface tilt to 10 from the horizontal without overturning. The stand is advantageously fashioned lightweight using plastic materials which is practical due to the plurality of intermeshing legs.

Although the present invention has been described with reference to a specific embodiment, those of skill in the art will recognize that changes may be made thereto without departing from the scope and spirit of the invention as set forth in the appended claims.

The features disclosed in the foregoing description, in the claims and/or in the accompanying drawings may, both separately and in any combination thereof, be material for realising the invention in diverse forms thereof.

## Claims

1. An adjustable stand for supporting a piece of equipment from a surface, comprising:
a first support leg and a second support leg, each support leg having a first end supported from a surface and extending obliquely toward each other from the first ends, cris- scrossing, and terminating in second ends spaced from each other;
a first length adjustable strut connecting said second ends; an equipment support platform supported from said second ends; and
a user activated means for selectively adjusting said strut to raise or lower the platform.

2. The stand according to claim 1, wherein said user activated means comprises a first axle rotatably connected to said first support leg at said second end thereof, said first axle having a gear operator thereon; and
said first strut having a bevel gear engaged to said gear operator and connected to a first internally threaded socket, and a first threaded stud threaded into said first socket and operatively connected to said second support leg and fixed against axial rotation, rotation of said first axle rotates said first bevel gear and first socket and causes extension or retraction of said first stud into said first socket and effectively changes a length of said first strut.

3. The stand according to claim 2 further comprising:
a third support leg arranged in parallel to said first support leg and spaced from said first support leg along said first axle;
a fourth support leg arranged in parallel to said second support leg;
a second axle penetrating said second support leg and said fourth support leg, said first strut connected to said second axle.

4. The stand according to claim 3 further comprising:
a second gear operator on said axle;
a second length adjustable strut having a second bevel gear engaged with said second gear operator on said first axle and a second socket connected to said second bevel gear and having an internal thread opposite to said thread of said first socket of said first strut and a second stud having a thread compatible with said second socket and engaged therein and connected to said second axle and prevented from axially rotating.

5. The stand according to claim 4, wherein said equipment supporting platform comprises a slot for receiving said second axle.

6. The stand according to claim 1, wherein said first support leg comprises a first plurality of leg members forming a comb-like structure and said second support leg comprises a second plurality of leg members forming a comb-like structure, said first plurality of leg members intermesh with said second plurality of leg members; and
said first plurality of leg members connected at said first end to a first support bar and said second plurality of leg members connected at said first end with a second support bar, said support bars resting on said surface.

7. The stand according to claim 6, wherein said stand is composed of plastic.

8. A stand for supporting a monitor from a table top, comprising:
a first support and a second support spaced apart and configured to rest on the table top;
a plurality of first legs connected at first ends to said first support and extending obliquely upwardly therefrom;
a plurality of second legs connected at first ends to said second support and extending obliquely upwardly therefrom;
said first legs and said second legs cris- scrossing and being pinned together at at least one location at an intersection between the first and second legs;
said plurality of first legs and said plurality of second legs extending upwardly to second ends, said plurality of first legs connected rotatably at their second ends by a first axle, said plurality of second legs connected at their second ends by a second axle;
said first axle having a first gear operator and a second gear operator spaced apart along the first axle;
a first strut assembly having a first bevel gear engaged to said first gear operator, connected between said first axle and said second axle, said first bevel gear axially rotatable by said first gear operator, and said first strut assembly having first means for extending or retracting a length of said first strut assembly by axial rotation thereof, said first means connected to said first bevel gear;
a second strut assembly having a second bevel gear engaged with said second gear operator, connected between said first axle and said second axle, said second bevel gear axially rotatable by said second gear operator and said second strut assembly having second means for extending or retracting a length of said second strut assembly by axial rotation thereof, said second means connected to said second bevel gear;
rotation of said first axle causing said first strut assembly and said second strut assembly to elongate or retract depending on rotation direction of said first axle and causing said second ends of said first legs and said second legs to draw together or move apart.

9. The stand according to claim 8, wherein said first means for extending or retracting the length of said first strut assembly comprises a first socket portion fixed for rotation with said first bevel gear, and a first stud portion threaded into said first socket portion, rotation of said first socket portion drawing said first stud portion into said first socket portion or retracting therefrom depending on rotation direction to elongate or retract the length of said first strut assembly.

10. The stand according to claim 9, wherein said second means for extending or retracting said second strut assembly comprises a second socket portion having an internal thread thereof and connected for rotation with said second bevel gear, and a second stud portion threaded into said second socket portion and depending on direction of rotation, retractable into or extendable out of said socket portion to change the length of said second strut assembly; and
wherein said first socket portion and said second socket portion comprise opposite turned threads, and said first stud portion and said second stud portion have oppositely turned threads.

11. The stand according to claim 10 further comprising at least one spring biasing said first axle toward said second axle.

12. The stand according to claim 8 comprising turning knobs attached to opposite ends of said first axle.

13. A stand for a monitor, comprising:
a monitor supporting platform;
a first support portion and a second support portion configured to sit on a table top;
a plurality of first legs and a plurality of second legs, said first legs and said second legs crisscrossed and pinned at a central region thereof, and said first legs connected to said first support portion and said second legs connected to the second support portion, opposite ends of said first plurality of legs and said second plurality of legs elevated from the table top and said monitor supporting platform connected thereto; and
a means for drawing said second ends of said plurality of first and second legs toward or away from each other to alter the elevation of the monitor support platform, said means comprising a rotatable knob for user adjustment.

14. The stand according to claim 13, wherein said means comprises a strut spanning between second ends of said first plurality of legs and said second plurality of legs, said strut adjustable in length upon rotation of a first portion thereof, and a gear arrangement connected between said turning knob and said first portion of said strut to cause rotation of said first portion upon rotation of said turning knob to alter the length of said strut.

15. The apparatus according to claim 14 further comprising a spring biasing said second ends together.

16. The stand according to claim 14, wherein said gear arrangement comprises an axle penetrating the second end of said first plurality of legs, said axle having a gear operator applied thereto enmesh with a first gear applied to said first portion, said axle turnable with said turning knob.

17. The stand according to claim 16 further comprising a second strut having a second portion of rotation thereof causing a change in length of said second strut, said second portion having a second gear applied thereto engaged to a second gear operator applied onto said axle, said first gear operator and second gear operator are bevel gears arranged facing each other and said second strut elongatable by turning said second portion in an opposite direction as said first portion.

18. The stand according to claim 17 further comprising a second axle which connects second ends of said second leg members; and wherein said first gear and said second gear comprise bevel gears enmesh with said first and second gear operators on said axle; and said first portion and said second portion comprise socket portions having oppositely turned threads therein; and said first and second struts comprise stud portions having oppositely turned threads engaged into respective socket portions and connected to said second axle.

19. The stand according to claim 13, wherein said monitor supporting platform comprises a bowled-out area allowing the monitor to be pivoted therein.
